# EUROPÄISCHE PATENTANMELDUNG

(11) **EP 3 202 689 A1**
(43) Veröffentlichungstag der Anmeldung: **09.08.2017**
(21) Anmeldenummer: 17154141.0
(22) Anmeldetag: 01.02.2017
(51) Int. Cl.: B65G 9/00, B65G 17/20, B65G 19/02

(54) **LAUFWAGEN FÜR EIN FÖRDERSYSTEM UND FÖRDERSYSTEM MIT LAUFWAGEN**

(30) Priorität: 04.02.2016 CH 1532016
(71) Anmelder: Ferag AG, 8340 Hinwil (CH)
(72) Erfinder: Fenile, Roberto, 8623 Wetzikon (CH)
(74) Vertreter: Frei Patent Attorneys

(57) **Zusammenfassung**

Die Erfindung betrifft einen Laufwagen (1, 51) für ein schienengeführtes Fördersystem, enthaltend einen zum Umgreifen einer Laufschiene (20) ausgebildeten Laufwagenkörper (2), welcher einen ersten und zweiten Schenkel (3, 4) umfasst, wobei die Schenkel (3, 4) durch einen sich quer erstreckenden Verbindungabschnitt (5) miteinander verbunden sind. Der erste Schenkel (3) weist ein auf seiner Innenseite angebrachtes erstes Laufrollenpaar (6a, 6b) auf. Der zweite Schenkel (4) weist ein auf seiner Innenseite angebrachtes zweites Laufrollenpaar (7a, 7b) auf. Das erste und zweite Laufrollenpaar (6a, 6b; 7a, 7b bzw. 6a, 56b; 7a, 57b) der beiden Schenkel (3, 4) sind kreuzweise gegengleich versetzt zueinander angeordnet. Jeweils eine erste Laufrolle (6a, 7a) des ersten und zweiten Laufrollenpaares ist als Tragrolle ausgebildet, über welche die Last des Laufwagens (1, 51) auf die Laufschiene (20) übertragbar ist. Jeweils eine zweite Laufrolle (6b, 7b) des ersten und zweiten Laufrollenpaares ist als Führungsrolle zur Führung des Laufwagens entlang der Laufschiene (20) ausgebildet.

## Beschreibung

Die Erfindung liegt auf dem Gebiet der Transport- und Fördertechnik, insbesondere der Intra-Logistik. Die Erfindung betrifft einen Laufwagen für ein schienengeführtes Fördersystem, insbesondere für ein Hängefördersystem, enthaltend einen zum Umgreifen einer Laufschiene ausgebildeten Laufwagenkörper, welcher einen ersten und zweiten Schenkel umfasst, wobei die Schenkel durch einen sich quer erstreckenden Verbindungabschnitt miteinander verbunden sind.

Der erste Schenkel weist ein auf seiner Innenseite angebrachtes erstes Laufrollenpaar auf Der zweite Schenkel weist ein auf seiner Innenseite angebrachtes zweites Laufrollenpaar auf Das erste und zweite Laufrollenpaar der beiden Schenkel sind kreuzweise gegengleich versetzt zueinander angeordnet.

Ferner betrifft die Erfindung auch ein Fördersystem, insbesondere ein Hängefördersystem, mit Laufwagen und einer Laufschiene, entlang welcher die Laufwagen zum Fördern, insbesondere zum hängenden Fördern, von Fördergütern rollend bewegbar sind.

In automatisierten Warenlagern, weitläufigen Produktionsstätten und beim Fördern von Waren ganz allgemein besteht der Bedarf, Güter mittels Hängefördereinrichtungen zwischen Bearbeitungsstationen zu fördern, in Warenlagern zwischenzuspeichern und wieder aus Warenlagern abzurufen sowie für den Versand bereitzustellen.

So ist es aus dem Stand der Technik bekannt, Gegenstände wie Kleider aber auch Fördertaschen, welche ein Fördergut aufnehmen, mittels Laufwagen, welche über Laufrollen entlang einer Laufschiene abrollen, in Hängefördereinrichtungen zu fördern.

So beschreibt die Veröffentlichungsschrift EP 0 856 480 B1 einen als Aussenläufer ausgebildeten Laufwagen mit einem Laufwagenkörper, welcher aus zwei über einen quer verlaufenden Verbindungsabschnitt miteinander verbundenen Schenkel aufgebaut ist. Auf der Innenseite der Schenkel sind jeweils zwei Laufrollen kreuzweise versetzt zueinander angeordnet.

Der Laufwagenkörper umfasst eine als Flachprofil ausgebildete Laufschiene aussenseitig, wobei obere Laufrollen auf oberen Laufflächen und unter Laufrollen auf unteren Laufflächen des Flachprofils abrollen.

Die Spurführung wird durch aussenseitig an den Laufrollen angeordnete Spurkränze gewährleistet, welche eine Bewegung des Laufwagens quer zur Laufrichtung begrenzen bzw. verhindern.

Damit trotz kurzem Radabstand eine stabile Führung des Laufwagens entlang der Laufschiene gewährleistet wird, sind die Rollen weitgehend spielfrei an der Laufschiene geführt.

Der Laufwagen gemäss EP 0 856 480 B1 weist den Nachteil auf, dass die weitgehend spielfreie Führung des Laufwagens entlang der Laufschiene zu einem erhöhten Verschleiss und im schlimmsten Fall zum Verklemmen des Laufwagens an der Laufschiene, z. B. bei Kurvenfahrten, führen kann.

Weisen die Laufrollen gegenüber der Laufschiene allerdings Spiel auf, so wird die Führung entlang der Laufschiene unruhig und im schlimmsten Fall instabil. Der Laufwagen wackelt auf der Laufschiene.

Zudem muss die Laufschiene für eine stabile Führung des Laufwagens zwingend jeweils zwei seitliche, einander paarweise gegenüber liegende untere und obere Laufflächen ausbilden, was eine erhebliche Einschränkung in der Gestaltung der Laufschiene bedeutet.

Es ist daher eine Aufgabe der vorliegenden Erfindung, einen Laufwagen und ein Fördersystem vorzuschlagen, welche eine stabile, sichere, ruhige und störungsfreie Bewegung des Laufwagens entlang der Laufschiene insbesondere auch bei Kurvenfahrten erlaubt.

Der Laufwagen soll überdies platzsparend sein, so dass mehrere, in Gruppenformation dicht hintereinander angeordnete, baugleiche Laufwagen entlang der Förderbahn möglichst wenig Platz beanspruchen. Baugleich bedeutet, dass die Laufwagen jeweils die gleiche Form und Dimension bzw. Geometrie aufweisen.

Die Aufgabe wird durch die Merkmale der unabhängigen Ansprüche 1 und 15 gelöst. Die abhängigen Ansprüche, die Beschreibung und die Figuren beinhalten besondere Ausführungsformen und Weiterbildungen der Erfindung.

Der erfindungsgemässe Laufwagen zeichnet sich nun dadurch aus, dass jeweils eine erste Laufrolle des ersten und zweiten Laufrollenpaares als Tragrolle ausgebildet ist, über welche die Last des Laufwagens auf die Laufschiene übertragbar ist.

Jeweils eine zweite Laufrolle des ersten und zweiten Laufrollenpaares ist ferner als Führungsrolle zur Führung des Laufwagens entlang der Laufschiene ausgebildet.

In dieser Anordnung haben die Führungsrollen neben der Aufnahme von Zentripetalkräften sowie Gier- und Rollmomenten auch die Funktion Nick- bzw. Kippmomenten aufzunehmen.

Die Führungsrolle bildet jeweils insbesondere eine Begrenzung gegen eine Verschiebung des Laufwagens in die zwei einander entgegengesetzten Richtungen parallel zur Drehachse der Führungsrolle aus.

Gemäss einer Weiterbildung enthalten die Führungsrollen jeweils eine in Drehrichtung geschlossen umlaufende, beidseitig von einer Führungsflanke eingefasste Führungsvertiefung. Die Führungsvertiefung dient zur Aufnahme der Führungsleiste einer Laufschiene zwecks Führung des Laufwagens entlang der Laufschiene. Die Führungsleiste kann hierzu in die Führungsvertiefung eingreifen.

Die Tragrollen zeichnen sich insbesondere dadurch aus, dass diese keine seitliche Führungsflanke bzw. Spurkranz zur seitlichen Führung aufweisen. Die Lauffläche der Tragrollen kann quer zur Drehrichtung eben oder bombiert sein.

Die Tragrollen zeichnen sich ferner auch dadurch aus, dass die Gewichtslast des Laufwagens über die Tragrollen auf die Laufschiene übertragen wird. So kann insbesondere die gesamte Gewichtslast über die Tragrollen auf die Laufschiene übertragen werden. Der Laufwagen liegt entsprechend über die Tragrollen der Laufschiene auf.

Die Führungsrollen dienen dazu, den Laufwagen so zu führen, dass seine Laufrichtung im Wesentlichen mit jener der Laufschiene übereinstimmt. Hierzu müssen die Führungsrollen insbesondere seitliche Kräfte aufnehmen. Diese seitlichen Kräfte wirken insbesondere auf die Führungsflanken.

So nehmen die Führungsrollen beispielsweise in Kurvenabschnitten die auf den Laufwagen wirkenden Zentripetalkräfte auf. Ferner nehmen die Führungsrollen auch Giermomente, also Drehmomente um vertikal auf die Laufrichtung stehende Achsen, sowie Rollmomente, also Drehmomente um parallel zur Laufrichtung ausgerichtete Achsen auf.

Giermomente werden beispielsweise durch aussenmittig am Laufwagen angreifenden Antriebskräften erzeugt. Dies ist beispielsweise der Fall, wenn die Laufwagen einseitig über ein seitlich am Laufwagen angeordnetes Mitnehmerkontaktelement angetrieben werden.

Die Führungsrollen verhindern nun, dass der Laufwagen verkantet bzw. die Tragrollen mit Teilen der Laufschiene in Kontakt kommen, die keine Laufflächen sind.

Die Führungsrollen sind insbesondere nicht dazu vorgesehen, Gewichtslasten des Laufwagens auf die Laufschiene zu übertragen. So kann vorgesehen sein, dass von der Führungsrolle keine Lasten auf die Laufschiene übertragen werden. Dies ist insbesondere dann der Fall, wenn die Führungsrollen unterhalb des mit der Führungsrolle kooperierenden Führungsabschnitts der Laufschiene, wie Führungsleisten oder Abrollflächen, angeordnet sind.

Da die Führungsrollen insbesondere keine Lasten aufnehmen, können diese grundsätzlich kleinere Durchmesser als die Tragrollen aufweisen.

Die Führungsvertiefung gemäss der oben genannten besonderen Ausführung der Führungsrolle ist nun insbesondere mittig an der Führungsrolle angeordnet.

Die beidseitig von einer Führungsflanke eingefasste Führungsvertiefung kann insbesondere eine Führungsrille, ein Führungsschlitz oder eine Führungsnut sein. Die Führungsvertiefung kann V-förmig sein. Die Führungsvertiefung kann U-förmig sein.

Die Führungsvertiefung ist nun insbesondere so ausgebildet, dass die Führungsleiste der Laufschiene hochkant in die Führungsvertiefung eingreifen kann.

Die Führungsflanke kann beispielsweise ein Spurkranz sein.

Gemäss einer Weiterbildung verlaufen die Drehachsen der Führungsrollen und der Tragrollen parallel zueinander.

Gemäss einer Weiterbildung verlaufen die Drehachsen der Führungsrollen senkrecht zur Mittelängsebene des Laufwagens. Das heisst, die Tragrollen sind stehend angeordnet.

Die Mittelängsebene verläuft parallel zur Laufrichtung des Laufwagens durch den Schienenaufnahmeraum zwischen den beiden Schenkel hindurch. Die Mittelängsebene stellt insbesondere eine Symmetrieebene des Laufwagens dar.

Das Merkmal "stehend angeordnet" bedeutet auch, dass die Drehachsen der Laufrollen bei einer horizontalen Förderbahn ebenfalls horizontal und quer zur Laufrichtung angeordnet sind.

Gemäss einer Weiterbildung verlaufen die Drehachsen der Tragrollen senkrecht zur Mittelängsebene des Laufwagens. Die Führungsrollen sind entsprechend stehend angeordnet.

Gemäss einer Weiterbildung können die Drehachsen der Führungsrollen gegenüber der oben genannten Mittelängsebene auch geneigt verlaufen und einen Winkel von kleiner 90° einschliessen.

Gemäss einer Weiterbildung können die Drehachsen der Tragrollen gegenüber der oben genannten Mittelängsebene auch geneigt verlaufen und einen Winkel von kleiner 90° einschliessen.

Gemäss einer Weiterbildung schliessen die Drehachsen der Führungsrolle und der Tragrolle einer Laufrollenpaarung am jeweiligen Schenkel in der Parallelprojektion in Laufrichtung einen spitzen Winkel ein. Die Drehachsen laufen jeweils zum gegenüber liegenden Schenkel hin insbesondere auseinander.

Der Laufwagen kann insbesondere insgesamt exakt zwei Laufrollenpaare mit jeweils einer Tragrolle und einer Führungsrolle enthalten.

Die kreuzweise versetzt angeordneten Laufrollen bzw. Laufrollenpaare weisen in einer Parallelprojektion parallel zu ihren Drehachsen insbesondere eine "X"-förmige Anordnung auf.

Die Tragrolle und Laufrolle einer Laufrollenpaarung können in einer gemeinsamen Ebene angeordnet sein. Die Tragrolle und Laufrolle einer Laufrollenpaarung können entlang ihrer Drehachsen auch zueinander versetzt angeordnet sein.

Dank der oben beschriebene Anordnung des ersten und zweiten Laufrollenpaares werden auch Nick- bzw. Kippbewegungen, also Drehmomente um seitlich zur Laufrichtung ausgerichtete Achsen, relativ zur Laufschiene aufgefangen. Kippmomente wirken insbesondere bei aufsteigenden oder abfallenden Förderbahnabschnitten sowie bei ändernden Geschwindigkeiten.

Dadurch kann auch ein Schwingen bzw. Wackeln der Laufwagen bzw. der mit diesen geförderten Fördergütern bei wechselnden Beschleunigungen verhindert werden.

Die Anordnung der Laufrollen an den Schenkeln kann nun dergestalt sein, dass mehrere dicht aneinander gereihte Laufwagen an den jeweiligen Schenkeln eine erste, z. B. obere Reihe und eine zweite, z. B. untere Reihe von jeweils hintereinander in Laufrichtung angeordneten Laufrollen ausbilden.

Gemäss einer Weiterbildung ist die Tragrolle jeweils insbesondere zum freien Ende des Schenkels und die Führungsrolle zum Verbindungsabschnitt hin am Schenkel angeordnet.

Die Schenkel weisen jeweils, wie bereits erwähnt, eine zur Laufschiene weisende Innenseite, sowie im Weiteren eine der Innenseite entgegen gesetzt nach aussen weisende Aussenseite auf Ferner weisen die Schenkel jeweils eine in Laufrichtung weisende vordere Schenkelstirnseite und eine entgegen die Laufrichtung weisende rückwärtige Schenkelstirnseite auf

Gemäss einer Weiterbildung der Erfindung bilden die beiden Schenkelstirnseiten eines Schenkels mindestens eine Paarung aus einem in Laufrichtung bzw. entgegen der Laufrichtung vorstehenden und einem zurückversetzten Stirnseitenabschnitt aus, welche an den Schenkelstirnseiten gegengleich zueinander ausgebildet und angeordnet sind, derart dass der vorstehende und zurückversetzte Stirnseitenabschnitt der Schenkel zweier entlang der Laufrichtung aneinander geschobenen, baugleichen Laufwagen an ihren Schenkelstirnseiten ineinandergreifen, insbesondere formschlüssig ineinandergreifen.

Das heisst, die Kontur des besagten Stirnseitenabschnitts der vorderen Schenkelstirnseite eines nachlaufenden Laufwagens greift insbesondere formschlüssig in die Kontur des gegengleich ausgebildeten Stirnseitenabschnittes der rückseitigen Schenkelstirnseite eines unmittelbar vorlaufenden, baugleichen Laufwagens ein.

Der vorstehende Stirnseitenabschnitt ist insbesondere ein Vorsprung und ganz besonders eine Ausbuchtung. Der zurückversetzte Stirnseitenabschnitt ist insbesondere eine Vertiefung und ganz besonders eine Einbuchtung.

Die Achsen der Tragrollen können in einem vorstehende Stirnseitenabschnitt angeordnet sein.

Die Achsen der Führungsrollen können in einem vorstehende Stirnseitenabschnitt angeordnet sein.

Gemäss einer besonderen Ausführungsform der Erfindung enthält jeder Stirnseitenabschnitt eines Schenkels jeweils einen vorstehende Stirnseitenabschnitt, insbesondere einen Vorsprung, und einen zurückversetzte Stirnseitenabschnitt, insbesondere eine Einbuchtung. Die besagen Stirnseitenabschnitte sind, entlang der Schenkelachse betrachtet, nebeneinander angeordnet. Die besagen Stirnseitenabschnitte eines Schenkels sind insbesondere gegengleich ausgebildet.

Die ineinander greifenden, gegengleich ausgebildeten Stirnseitenabschnitte sorgen insbesondere für eine Sicherung gegen eine Verschiebung zweier benachbarter Laufwagen relativ zueinander entlang einer Achse senkrecht zur Laufrichtung und senkrecht zu den Drehachsen der Laufrollen.

Das heisst, zwei benachbarte, einander anliegende, baugleiche Laufwagen sind in einer hängenden Position gegen eine vertikale Verschiebung relativ zueinander gesichert.

Die Sicherung der Laufwagen gegen eine vertikale Relativverschiebung bewirkt, dass zwischen benachbarten, einander anliegenden Laufwagen Lasten übertragen werden können. Dies erlaubt zum Beispiel in einer aufgereihten, d.h. aufgestauten Speicherformation einen Lastenausgleich zwischen den Laufwagen.

Ferner wird dank der oben genannten gegenseitigen Blockierung der Laufwagen bezüglich einer vertikalen Relativverschiebung die Bewegung der Laufwagen in der Gruppenformation verbessert.

Gemäss einer Weiterbildung der Erfindung können die Konturen der Schenkelstirnseiten eines Schenkels insgesamt jeweils zueinander gegengleich ausgebildet sein, derart, dass die Kontur der vorderen Schenkelstirnseite eines nachlaufenden, baugleichen Laufwagens formschlüssig in die Kontur der rückseitigen Schenkelstirnseite eines unmittelbar vorlaufenden, baugleichen Laufwagens eingreifen kann.

Gemäss einer Weiterbildung der Erfindung sind die Schenkel des Laufwagens derart ausgebildet und die Laufrollen derart an den Schenkeln angeordnet, dass Laufrollen von in Laufrichtung aneinander geschobenen, baugleichen Laufwagen mit dem benachbarten Schenkel des unmittelbar vorlaufenden oder nachlaufenden Laufwagens innenseitig überlappen.

Die Führungsrollen sind jeweils insbesondere über eine, insbesondere drehfeste, Befestigungsachse am Laufwagenkörper befestigt. Die Befestigungsachse ist insbesondere starr.

Gemäss einer Weiterbildung sind die Führungsrollen auf eine drehfest am Laufwagenkörper angeordnete Befestigungsachse aufgeschoben und am Laufwagenkörper verschraubt.

Da die Führungsrollen keine Lasten aufnehmen, können diese im Vergleich zu den Tragrollen mit kostengünstigeren Lagern drehbar am Laufkörper gelagert sein.

Die Führungsrollen können insbesondere mit seitlichem Spiel am Laufwagenkörper befestigt sein. Das seitliche Spiel soll eine seitliche Verschiebung der Führungsrollen entlang ihrer geometrischen Drehachse ermöglichen.

So können die Führungsrollen jeweils auf einer drehfesten Befestigungsachse am Laufwagenkörper drehbar und seitlich gleitend verschiebbar gelagert sein.

Gemäss einer Weiterbildung der Erfindung sind die Führungsrollen mit radialem Spiel am Laufwagenkörper angeordnet bzw. befestigt. Das radiale Spiel soll eine Verschiebung der Führungsrollen in einer Ebene quer zur ihrer geometrischen Drehachse, also insbesondere eine radiale Verschiebung ermöglichen.

Das Spiel soll insbesondere übermässigem Verschleiss oder gar einem Verklemmen der Laufwagen in Kurvenabschnitten vorbeugen. Der Verschleiss bzw. das Verklemmen der Laufwagen in Kurvenabschnitten erklärt sich mit den veränderten geometrischen Verhältnissen an der Laufschiene in den Kurvenabschnitten. So ändern sich nämlich die Distanzen der Auflagepunkte der Tragrolle und der Führungsrolle einer Laufrollenpaarung in Kurvenabschnitten der Laufschiene relativ zueinander.

Die Anordnung bzw. Befestigung der Führungsrollen mit Spiel soll nun dem oben genannten Problem Rechnung tragen, indem die Führungsrollen jeweils ihre Position relativ zu den Tragrollen geringfügig verändern können, um so diese veränderten Distanzen auszugleichen.

Da die Führungsrollen nicht zur Aufnahme von Lasten vorgesehen sind, wirkt sich das Spiel der Führungsrollen nicht negativ auf die Laufstabilität des Laufwagens entlang der Laufschiene aus.

Das seitliche Spiel kann beispielsweise 0.1 mm oder mehr, insbesondere 0.2 mm oder mehr betragen. Das seitliche Spiel kann beispielsweise 2 mm oder weniger, insbesondere 1 mm oder weniger betragen.

Das radiale Spiel kann beispielsweise 0.1 mm oder mehr, insbesondere 0.2 mm oder mehr betragen. Das radiale Spiel kann beispielsweise 2 mm oder weniger, insbesondere 1 mm oder weniger betragen.

Die erfindungsgemässe Befestigung der Führungsrollen mit Spiel am Laufwagen erlaubt zudem die Herstellung von Laufschienen mit grösseren Fertigungstoleranzen. Dadurch lass sich die Fertigungskosten für die Laufschienen senken.

Die Anordnung von Laufwagen und Laufschiene kann ferner so ausgelegt sein, dass eine während der Förderbewegung des Laufwagens entlang der Laufschiene in die Führungsvertiefung eingreifende Führungsleiste zum Boden der Führungsvertiefung hin Spiel aufweist.

Das seitliche Spiel und/oder radiale Spiel kann beispielsweise 0.1 mm oder mehr, insbesondere 0.2 mm oder mehr betragen. Das Spiel kann beispielsweise 2 mm oder weniger, insbesondere 1 mm oder weniger betragen.

Dank der Anordnung der Führungsrollen mit Spiel am Laufwagen, zeigt sich die Führung der Laufwagen entlang der Laufschiene tolerant gegenüber Verschleiss an Laufrollen und Laufschiene. So treten trotz Verschleiss an Laufrollen und Laufschiene weniger Störungen auf.

Der Laufwagen ist als Aussenläufer ausgebildet. Das heisst, der Laufwagen umfasst die Laufschiene aussenseitig.

Der Laufwagenkörper bildet im Querschnittsprofil aus den beiden Schenkeln und dem Verbindungsabschnitt insbesondere einen einseitig offenen Umfassungsabschnitt zum Umfassen der Laufschiene aus. Der Umfassungsabschnitt kann insbesondere U-förmig sein.

Der Umfassungsabschnitt bildet einen einseitig offenen Schienenaufnahmeraum aus. Die Rollen sind zum Schienenaufnahmeraum hin angeordnet.

Der Laufwagen enthält insbesondere ein am Laufwagenkörper angeordnetes Halteorgan zum Halten eines Fördergutes.

Das Halteorgan dient insbesondere der hängenden Halterung eines Förderguts zwecks hängender Förderung.

Das Halteorgan ist insbesondere unterhalb des Laufwagenkörpers angeordnet. Das Halteorgan ist insbesondere am Verbindungsabschnitt angeordnet.

Das Halteorgan ist insbesondere aussenseitig am Laufwagenkörper, d.h. ausserhalb des Schienenaufnahmeraums, angeordnet.

Das Halteorgan kann integraler Teil des Laufwagenkörpers sein. So kann das Halteorgan zusammen mit dem Laufwagenkörper in einen Spritzgiessverfahren gegossen sein.

Das Halteorgan kann allerdings auch an den Laufwagen angebracht sein.

Das Halteorgan kann zum Beispiel eine Durchgangsöffnung umfassen. Die Durchgangsöffnung dient beispielsweise zum Einhängen eines Bügels, einer Tasche oder eines Beutels. So kann das Halteorgan mit Durchgangsöffnung beispielsweise eine Öse sein.

Die Durchgangsöffnung bzw. die Öse kann quer zur Laufrichtung oder längs zur Laufrichtung ausgerichtet sein.

Das Halteorgan kann ferner auch einen Haken umfassen.

Das Halteorgan kann auch zum klemmenden Halten ausgelegt sein. So kann das Halteorgan eine Klammer bzw. ein Greifer umfassen.

Andere Haltemechanismen, welche zum Beispiel mittels magnetischen Kräften, Haft- oder Formschlussverbindungen etc. funktionieren, sind ebenfalls möglich. So kann das Halteorgan zum Beispiel einen Magneten umfassen.

Am Laufwagenkörper kann ferner auch ein Mitnehmerkontaktelement zur Herstellung eines Mitnahmekontaktes mit einem Mitnehmer einer Mitnahmeeinrichtung angeordnet sein. Das Mitnehmerkontaktelement kann zum Beispiel ein Stift, ein Zapfen oder eine Zunge sein. Das Mitnehmerkontaktelement kann integraler Teil des Laufwagenkörpers sein.

Der Laufwagenkörper kann aus Metall sein. Der Laufwagenkörper kann aus Kunststoff, insbesondere aus einem verstärkten Kunststoff sein.

Der Laufwagenkörper kann zum Beispiel in einem Giessverfahren, insbesondere Spritzgiessen, hergestellt sein. Der Laufwagenkörper kann auch aus einem Pressprofil bzw. Strangpressprofil hergestellt sein. Ferner kann der Laufwagenkörper auch aus umgeformtem Blech hergestellt sein.

Zwecks Gewichteinsparung können die Schenkel des Laufwagens in Richtung parallel zu den Drehachsen der Rollen Durchbrüche oder Vertiefungen aufweisen. So können die Schenkel einen fachwerkartigen Aufbau mit einem geschlossenen Aussenrahmen und dazwischen angeordneten Verstrebungen aufweisen.

Der Laufwagenkörper kann zum Beispiel einteilig hergestellt sein. Dabei können eines oder mehrere der nachfolgenden Elemente, wie zum Teil oben bereits erwähnt, bereits bei der Herstellung in den einteiligen Laufwagenkörper integriert werden:
- Halteorgan, wie Haken oder Öse;
- Mitnehmerkontaktelement, wie Stift oder Haken;
- Verbindungselemente zum Verbinden mehrerer Laufwagen miteinander;
- Achsstummel für Rollen.

Der Laufwagen ist insbesondere als Einzelwagen ausgebildet, welcher unabhängig von anderen Laufwagen in einem Fördersystem entlang der Förderbahn bewegbar ist. Das heisst, die Laufwagen sind während ihrer Förderbewegung entlang der Förderbahn insbesondere nicht permanent miteinander direkt oder indirekt mechanisch gekoppelt.

Der Laufwagen kann allerdings auch mit Verbindungsmitteln ausgestattet sein, welche eine Verbindung mehrerer Laufwagen zu einer Komposition bzw. Gruppe aus mehreren Laufwagen erlauben.

Einzelne Laufwagen in einer Komposition bzw. Gruppe aus mehreren miteinander verbundenen Laufwagen können beispielsweise als Abstandhalter zwischen zwei Laufwagen dienen. Ein Abstandhalter zeichnet sich dadurch aus, dass dieser nicht mit einem Fördergut beschickt wird.

Die Verbindungsmittel, welche zum Beispiel eine gelenkige Verbindung erlauben, sind am Laufwagenkörper insbesondere am Verbindungsabschnitt angeordnet.

Im Weiteren kann am Laufwagenkörper ein elektronisch oder optisch auslesbares Identifikationselement angeordnet sein. Das Identifikationselement kann zum Beispiel ein Datenspeicherelement, wie RFID-Transponder, oder ein Strichcode oder Matrixcode sein. Das Identifikationselement kann auf den Laufwagenkörper aufgebracht oder in diesen integriert sein.

Das Identifikationselement dient zum Beispiel zur Speicherung von Identifikationsinformationen zum Laufwagen bzw. zu dem von diesem geförderten Fördergut. Ferner können in dem als Datenspeicherelement ausgelegten Identifikationselement auch Information zum zurückgelegten bzw. zurückzulegenden Förderweg gespeichert sein.

Das Identifikationselement kann zum Beispiel in einem Giessverfahren, wie Spritzgiessverfahren, in den Laufwagenkörper eingegossen bzw. von diesem umspritzt und auf diese Weise am Laufwagenkörper angebracht sein.

Die Erfindung betrifft im Weiteren auch ein Fördersystem, insbesondere ein Hängefördersystem, mit einer Laufschiene sowie mit mindestens einem Laufwagen.

Der mindestens eine Laufwagen des Fördersystems enthält einen zum Umgreifen einer Laufschiene ausgebildeten Laufwagenkörper, welcher einen ersten und zweiten Schenkel umfasst, wobei die Schenkel durch einen sich quer erstreckenden Verbindungabschnitt miteinander verbunden sind.

Der erste Schenkel weist ein auf seiner Innenseite angebrachtes erstes Laufrollenpaar auf. Der zweite Schenkel weist ein auf seiner Innenseite angebrachtes zweites Laufrollenpaar auf. Das erste und zweite Laufrollenpaar der beiden Schenkel sind kreuzweise gegengleich versetzt zueinander angeordnet.

Das Fördersystem zeichnet sich nun dadurch aus, dass jeweils eine erste Laufrolle des ersten und zweiten Laufrollenpaares als Tragrolle ausgebildet ist, über welche die Last des Laufwagens auf die Laufschiene übertragbar ist.

Die zweite Laufrolle des ersten und zweiten Laufrollenpaares ist jeweils als Führungsrolle zur Führung des Laufwagens entlang der Laufschiene ausgebildet.

Die Laufschiene bildet insbesondere einen Führungsabschnitt aus, welcher mit den Führungsrollen des Laufwagens zwecks Führung des Laufwagens entlang der Laufschiene kooperiert.

Die jeweilige Führungsrolle und die Laufschiene bzw. deren Führungsabschnitt sind insbesondere derart miteinander kooperierend ausgestaltet, dass jeweils eine Begrenzung gegen eine Verschiebung des Laufwagens in die zwei einander entgegengesetzten Richtungen parallel zur Drehachse der Führungsrolle ausgebildet wird.

Die Förderbewegung der Laufwagen erfolgt entlang der Laufschiene, welche die Förderbahn ausbildet.

Der Umfassungsabschnitt des Laufwagens ist insbesondere nach oben offen. Das heisst, der Verbindungsabschnitt verläuft unterhalb der Laufschiene.

Die Laufschiene bildet Laufflächen, insbesondere ebene Laufflächen für die Tragrollen aus. Tragrollen und Laufschiene sind insbesondere derart miteinander kooperierend ausgestaltet, dass keine axiale, d.h. seitliche Führung der Tragrollen ausgebildet wird.

Die Laufflächen sind insbesondere als Auflageflächen ausgebildet, welchen die Tragrollen aufliegen können.

Gemäss einer ersten Weiterbildung bildet die Laufschiene Führungsleisten zur Führung der Führungsrollen entlang der Führungsleisten aus. Die Führungsleisten greifen hierzu in Führungsvertiefungen der Führungsrollen ein.

Die Laufschiene weist insbesondere für jede Führungsrolle am Laufwagen jeweils eine der Führungsrolle zugeordnete Führungsleiste auf.

Die Führungsleiste verläuft in Längsrichtung der Laufschiene. Entsprechend verläuft die Führungsleiste insbesondere parallel zur Förderbahn.

Die Höhe der Führungsleiste ist insbesondere grösser als deren Breite, beispielsweise mindestens doppelt so gross. Die Führungsleiste ist insbesondere als Führungstreifen ausgebildet.

Auf die Führungsleiste kann zur Verminderung des Verschleisses der Führungsrollen, welche Laufflächen aus Kunststoff aufweisen können, sowie zur Verminderung der Abrollgeräusche ein Kunststoffprofil aufgesetzt sein. Das Kunststoffprofil kann auf die Führungsleiste geklemmt sein. Die Führungsleiste kann allerdings auch anderweitig mit einem Kunststoffmaterial umgeben bzw. beschichtet sein.

Die Laufschiene kann insbesondere eine Laufschiene sein wie sie in der noch nicht veröffentlichten internationalen Patentanmeldung WO/EP 2015/069156 beschrieben ist. Für weitere Details wird auf die genannte Patentanmeldung verwiesen.

So kann die Laufschiene ein Querschnittsprofil mit wenigstens drei miteinander verbundene Profilabschnitten aufweisen. Die Profilabschnitte umfassen:
- einen ersten seitlich nach aussen offenen Profilabschnitt mit einer ersten Lauffläche zur Aufnahme einer Tragrolle eines ersten Schenkels des Laufwagens;
- einen zweiten seitlich nach aussen offenen Profilabschnitt mit einer zweiten Lauffläche zur Aufnahme einer Tragrolle eines zweiten Schenkels des Laufwagens;
- einen dritten in vertikaler Richtung offenen Profilabschnitt mit zwei Führungsleisten zur Aufnahme jeweils einer Führungsrolle am ersten und zweiten Schenkel des Laufwagens.

Der erste und zweite Profilabschnitt sind hierbei spiegelsymmetrisch zu einer vertikalen Mittelängsebene der Laufschiene angeordnet.

Der dritte Profilabschnitt kann ebenfalls spiegelsymmetrisch zur vertikalen Mittelängsebene der Laufschiene angeordnet sein.

Der erste, zweite und dritte Profilabschnitt können jeweils ein Querschnittsprofil in U-Form ausbilden. Die U-Form umfasst einen Profilverbindungsabschnitt und beidseitig daran anschliessende Profilschenkel.

Der untere Profilschenkel des ersten und zweiten Profilabschnittes bildet jeweils eine Lauffläche für die Tragrollen aus. Die Profilverbindungsabschnitte des ersten und zweiten Profilabschnitts verlaufen insbesondere parallel zueinander.

Die Profilschenkel des dritten Profilabschnittes bilden jeweils eine Führungsleiste für die Führungsrollen aus.

Der Verbindungsabschnitt des ersten Profilabschnitts und der Verbindungsabschnitt des zweiten Profilabschnitts stehen insbesondere senkrecht auf dem Verbindungsabschnitt des dritten Profilabschnitts und stossen an diesen an.

Der erste und zweite Profilabschnitt können voneinander beabstandet sein und einen sich entlang der Laufschiene erstreckenden Zwischenraum ausbilden. Der sich entlang der Laufschiene erstreckende Zwischenraum kann oben und/oder unten durch eine physische Verbindung zwischen dem ersten und dem zweiten Profilabschnitt geschlossen sein.

Anstelle von Führungsleisten kann die Laufschiene gemäss vorliegender Erfindung auch in Laufrichtung verlaufende, jeweils beidseitig von einer Führungsflanke eingefasste Führungsvertiefungen zur Führung der Führungsrollen in den Führungsvertiefungen ausbilden. Die Führungsvertiefungen können insbesondere konkav ausgebildet sein.

In den Führungsvertiefungen werden Abrollflächen für die Führungsrollen ausgebildet.

Die Abrollflächen können gegenüber der Mittelängsebene des entlang der Laufschiene abrollenden Laufwagens senkrecht ausgerichtet sein. Die Abrollflächen können gegenüber der Mittelängsebene des entlang der Laufschiene abrollenden Laufwagens schräg verlaufen. Die Abrollflächen sind im Querschnittsprofil beispielsweise parallel zu den Drehachsen der Führungsrollen ausgerichtet.

Die Laufflächen können gegenüber der Mittelängsebene des entlang der Laufschiene abrollenden Laufwagens senkrecht ausgerichtet sein. Die Laufflächen können gegenüber der Mittelängsebene des entlang der Laufschiene abrollenden Laufwagens schräg verlaufen. Die Laufflächen sind im Querschnittsprofil beispielsweise parallel zu den Drehachsen der Tragrollen ausgerichtet.

Die Laufschiene kann aus Kunststoff sein. Die Laufschiene kann aus Metall, wie Aluminium oder Stahl, insbesondere Edelstahl, sein. Die Laufschiene kann einteilig oder mehrteilig ausgebildet sein. Die Laufschiene kann ein Strangpressprofil sein. Die Laufschiene kann ein Umformprofil sein, welches zum Beispiel aus Blech geformt ist.

Die Laufschiene kann oberflächenbehandelt sein. Eine Oberflächenbehandlung ist allerdings beim Einsatz von Edelstahl nicht notwendig.

Das Fördersystem kann im Weiteren eine Mitnahmeeinrichtung mit Mitnehmern zur Mitnahme der Laufwagen entlang ihrer Förderbahn enthalten.

Das Fördersystem kann überdies mindestens eine Weiche zum Aufteilen einer Förderbahn in Förderrichtung in mindestens zwei separate Förderbahnen enthalten.

Das Fördersystem kann überdies mindestens eine Zusammenführung zum Zusammenführen von mindestens zwei Förderbahnen in Förderrichtung zu einer gemeinsamen Förderbahn enthalten.

Das Fördersystem kann überdies eine Ausleseeinrichtung zum Auslesen der Identifikationselemente der Laufwagen enthalten. Die Ausleseeinrichtung kann hierzu mindestens einen Sensor umfassen.

Das Fördersystem kann ein Hängefördersystem sein. Bei Hängefördersystemen wird das Fördergut hängend gefördert. Das Fördergut befindet sich hierbei unterhalb des Laufwagens.

Das Fördersystem kann ein Schwerkraftfördersystem sein. Beim Schwerkraftfördersystem werden die Laufwagen entlang eines geneigten Förderabschnitts mittels Schwerkraftunterstützung angetrieben.

Da der Laufwagen dank der Führungsrollen sowie der kreuzweise versetzten Anordnung von Tragrollen und Führungsrollen auf der Laufschiene optimal stabilisiert ist, werden keine zusätzlichen mechanischen Stabilisierungsmassnahmen benötigt, welche zum Zweck haben, die Laufwagen in eine stabile Lage bzw. Ausrichtung in Laufrichtung zu bringen oder in dieser zu halten.

Durch die äusserst stabile Führung kann der Laufwagen zudem auch grössere Lasten aufnehmen. So erlaubt der erfindungsgemässe Laufwagen Lasten von bis zu 10 kg.

Die besondere Ausgestaltung des Laufwagens, welche eine Überlappung der Laufrollen mit dem Laufwagenkörper eines benachbarten, baugleichen Laufwagens ermöglicht, erlaubt neben der optionalen gegenseitigen, vertikalen Sicherung auch eine dichte und platzsparende Aneinanderreihung der Laufwagen entlang der Förderbahn bzw. in einem Speicherraum.

Eine platzsparende Aneinanderreihung der Laufwagen ist insbesondere in Speicherräumen wichtig, in welchen Laufwagen mit den Fördergütern vor der Weiterförderung zwischengespeichert werden sollen.

Ferner ist eine platzsparende Aneinanderreihung der Laufwagen auch in Leerspeicherräumen wichtig, in welchen leere Laufwagen bis zu ihrer Bereitstellung zwischengespeichert werden.

Im Folgenden wird der Erfindungsgegenstand anhand von Ausführungsformen, welche in den beiliegenden Figuren dargestellt sind, näher erläutert. Es zeigen jeweils schematisch:
- Figur 1: eine perspektivische Ansicht eines erfindungsgemässen Laufwagens gemäss einer ersten Ausführungsform;
- Figur 2: eine perspektivische Ansicht des entlang einer Laufschiene geführten Laufwagens gemäss Figur 1;
- Figur 3: eine Frontalansicht des entlang der Laufschiene geführten Laufwagens gemäss Figur 1 und 2;
- Figur 4: eine perspektivische Ansicht eines erfindungsgemässen Laufwagens gemäss einer zweiten Ausführungsform;
- Figur 5: eine perspektivische Ansicht des entlang einer Laufschiene geführten Laufwagens gemäss Figur 4;
- Figur 6: eine Frontalansicht des entlang der Laufschiene geführten Laufwagens gemäss Figur 4 und 5
- Figur 7: eine Frontalansicht einer dritten Ausführungsform eines entlang einer Laufschiene geführten Laufwagens;
- Figur 8: eine Frontalansicht einer vierten Ausführungsform eines entlang einer Laufschiene geführten Laufwagens;
- Figur 9: eine Frontalansicht einer fünften Ausführungsform eines entlang einer Laufschiene geführten Laufwagens;
- Figur 10: eine Frontalansicht einer sechsten Ausführungsform eines entlang einer Laufschiene geführten Laufwagens.

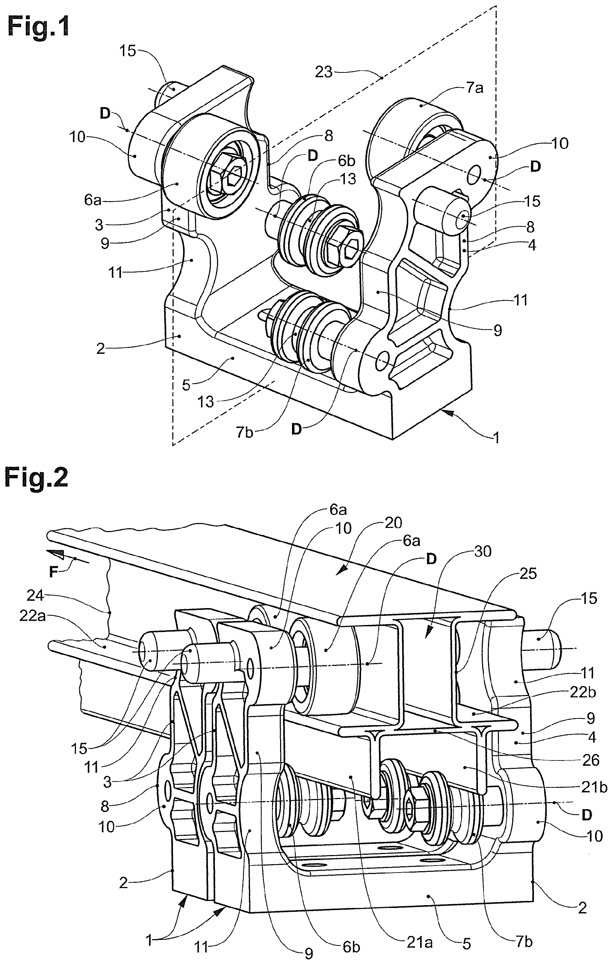

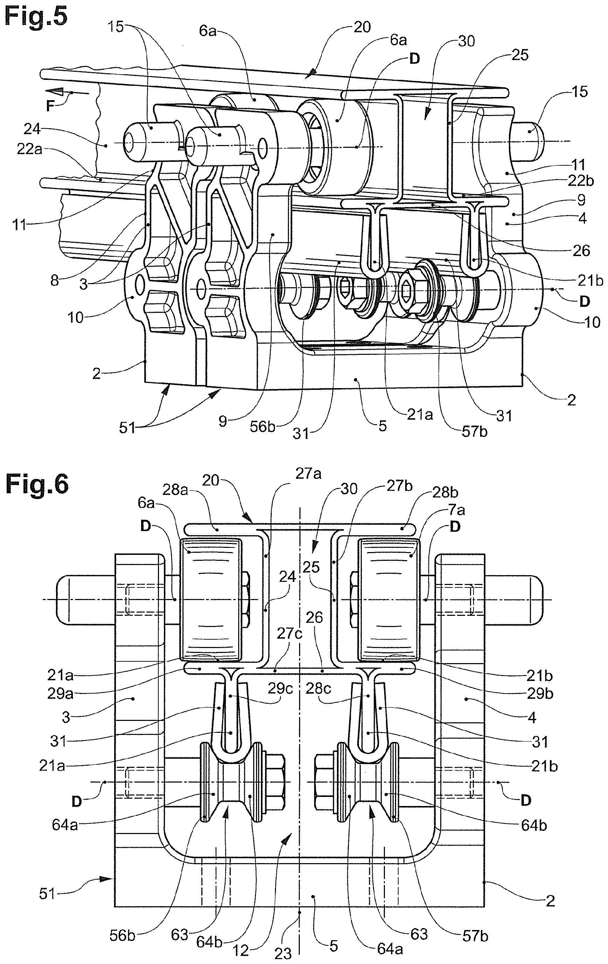

Der Laufwagen 1, 51, 101, 151, 201, 251 gemäss den Figuren 1 bis 10 weist einen zum Umgreifen einer Laufschiene 20, 120, 170, 220, 270 ausgebildeten Laufwagenkörper 2, 102, 152, 202, 252 auf Der Laufwagenkörper 2, 102, 152, 202, 252 enthält einen ersten Schenkel 3, 103, 153, 203, 253 und einen zweiten Schenkel 4, 104, 154, 204, 254. Die beiden Schenkel 3, 103, 153, 203, 253; 4, 104, 154, 204, 254 sind über einen sich quer erstreckenden Verbindungabschnitt 5, 105, 155, 205, 255 miteinander verbunden. Die beiden Schenkel 3, 103, 153, 203, 253; 4, 104, 154, 204, 254 und der Verbindungsabschnitt 5, 105, 155, 205, 255 bilden einen im Querschnittsprofil U-förmigen Umfassungsabschnitt aus. Dieser Umfassungsabschnitt schliesst einen offenen Schienenaufnahmeraum 12, 112, 162, 212, 262 ein, durch welchen die nachfolgend beschriebene Laufschiene 20, 120, 170, 220, 270 verläuft.

Die Schenkel 3, 103, 153, 203, 253; 4, 104, 154, 204, 254 weisen jeweils eine zur Laufschiene 20, 120, 170, 220, 270 bzw. zum Schienenaufnahmeraum 12, 112, 162, 212, 262 weisende Innenseite, sowie eine der Innenseite entgegen gesetzt nach aussen weisende Aussenseite auf.

Der erste Schenkel 3, 103, 153, 203, 253 weist eine auf seiner Innenseite und zum freien Schenkelende hin angebrachte Tragrolle 6a, 106a, 156a, 206a, 256a auf. Ferner weist der erste Schenkel 3, 103, 153, 203, 253 eine auf seiner Innenseite zum Verbindungsabschnitt 5, 105, 155, 205, 255 hin angeordnete Führungsrolle 6b, 56b, 106b, 156b, 206b, 256b auf. Die Tragrolle 6a, 106a, 156a, 206a, 256a und Führungsrolle 6b, 56b, 106b, 156b, 206b, 256b des ersten Schenkels 3, 103, 153, 203, 253 bilden ein erstes Laufrollenpaar aus.

Der zweite Schenkel 4, 104, 154, 204, 254 weist ebenfalls eine auf seiner Innenseite und zum freien Schenkelende hin angebrachte Tragrolle 7a, 107a, 157a, 207a, 257a auf Ferner weist der zweite Schenkel 4, 104, 154, 204, 254 ebenfalls eine auf seiner Innenseite zum Verbindungsabschnitt 5, 105, 155, 205, 255 hin angeordnete Führungsrolle 7b, 57b, 107b, 157b, 207b, 257b auf Die Tragrolle 7a, 107a, 157a, 207a, 257a und Führungsrolle 7b, 57b, 107b, 157b, 207b, 257b des zweiten Schenkels 4, 104, 154, 204, 254 bilden ein zweites Laufrollenpaar aus.

Zum freien Endabschnitt der Schenkel 3, 103, 153, 203, 253; 4, 104, 154, 204, 254 hin ist jeweils ein an deren Aussenseite, nach aussen weisendes Mitnehmerkontaktelement 15, 115, 165, 215, 265 in Ausführung eines Zapfens am Schenkel 3, 103, 153, 203, 253; 4, 104, 154, 204, 254 angeordnet. Das Mitnehmerkontaktelement ist allerdings kein zwingendes Merkmal der vorliegenden Erfindung und muss ferner auch nicht an der angezeigten Stelle am Laufwagen angebracht sein.

Die Führungsrollen 6b, 7b; 56b, 57b; 106b, 107b; 156b, 157b; 206b, 207b; 256b, 257b an den beiden Schenkeln 3, 103, 153, 203, 253; 4, 104, 154, 204, 254 dienen der Führung des Laufwagens 1, 51, 101, 151, 201, 251 entlang der Laufschiene 20, 120, 170, 220, 270. Sie sind mit seitlichem Spiel am Laufwagenkörper 2, 102, 152, 202, 252 befestigt.

Die Führungsrollen 6b, 7b; 56b, 57b; 106b, 107b; 156b, 157b; 206b, 207b; 256b, 257b sind hierzu auf einer feststehenden, d.h. drehfesten Befestigungsachse drehbar gelagert und über eine, insbesondere lösbare Schraubverbindung am Laufwagenkörper 2, 102, 152, 202, 252 befestigt.

Die Führungsrollen 6b, 7b; 56b, 57b; 156b, 157b; 206b, 207b gemäss den Ausführungsformen nach Figur 1 bis 8 weisen jeweils eine in Drehrichtung geschlossen umlaufende Führungsvertiefung 13, 63, 163, 213 zur Aufnahme der Führungsleiste 21a, 21b; 171a, 171b; 221a, 221b einer Laufschiene 20, 170, 220 auf. Die Führungsvertiefung 13, 63, 163, 213 wird beidseitig von einer Führungsflanke 14a, 14b; 64a, 64b; 164a, 164b; 214a; 214b eingefasst.

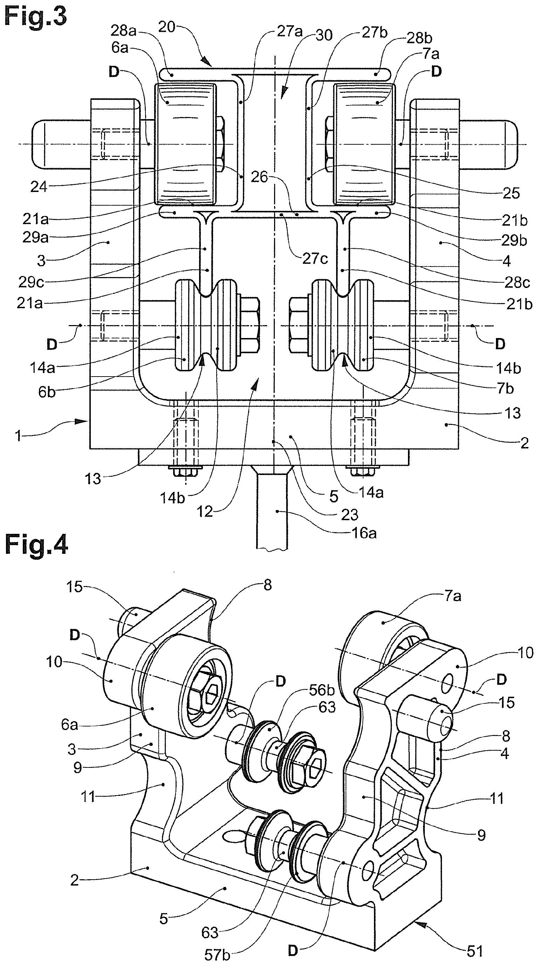

Der Führungsrollen 56b, 57b; 206b, 207b gemäss den Ausführungsformen nach Figur 4 bis 6 sowie Figur 8 unterscheiden sich von den Führungsrollen 6b, 7b; 156b, 157b gemäss den Ausführungsformen nach Figur 1 bis 3 sowie Figur 7 durch die Breite der Führungsvertiefungen 13, 63, 163, 213. Die unterschiedliche Breite der Führungsvertiefungen 13, 63, 163, 213 wird weiter unten im Zusammenhang mit der Laufschiene 20, 170, 220 noch näher erläutert.

In den Ausführungsformen gemäss den Figuren 1 bis 7 sind die Drehachsen D der Führungsrollen 6b, 7b; 56b, 57b; 156b, 157b und der Tragrollen 6a, 7a; 156a, 157a parallel zueinander ausgerichtet. Ferner sind die Tragrollen 6a, 7a; 156a, 157a und Führungsrollen 6b, 7b; 56b, 57b; 156b, 157b stehend angeordnet.

In sämtlichen Ausführungsformen sind die beiden Laufrollenpaare 6a, 6b; 7a, 7b; 6a, 56b; 7a, 57b; 106a, 106b; 107a, 107b; 156a, 156b; 157a, 157b; 206a, 206b; 207a, 207b; 256a; 256b; 257a, 257b der beiden Schenkel 3, 4; 103, 104; 153, 154; 203, 204; 253, 254 kreuzweise gegengleich versetzt zueinander angeordnet. Das heisst, die Laufrollenpaare weisen in einer Parallelprojektion parallel zu ihren Drehachsen D eine "X"-förmige Anordnung auf.

Die Schenkel 3, 4 weisen jeweils eine in Laufrichtung F weisende vordere Schenkelstirnseite 8 und eine entgegen die Laufrichtung F weisende rückwärtige Schenkelstirnseite 9 auf (nur in den Ausführungsformen nach Figur 1 bis 6 gezeigt).

Die Konturen der Schenkelstirnseiten 8, 9 eines Schenkels 3, 4 gemäss den beiden Ausführungsformen nach Figur 1 bis 6 sind jeweils zueinander gegengleich ausgebildet. Dadurch kann die Kontur der vorderen Schenkelstirnseite 8 eines nachlaufenden Laufwagens 1, 51 formschlüssig in die Kontur der rückseitigen Schenkelstirnseite 9 eines unmittelbar vorlaufenden, baugleichen Laufwagens 1, 51 eingreifen.

Die vorderen und rückwärtigen Schenkelstirnseiten 8, 9 weisen ferner jeweils einen kreisbogenförmigen Vorsprung 10 sowie eine kreisbogenförmige Vertiefung 11 auf, welche entlang der Schenkellängsachse betrachtet nebeneinander an der Schenkelstirnseite 8, 9 angeordnet sind. Vorsprung und Vertiefung 10, 11 können allerdings auch anders als kreisbogenförmig ausgestaltet sein.

Die Vertiefung 11 und der Vorsprung 10 am rückwärtigen Schenkelstirnseite 9 sind gegengleich zur Vertiefung 11 und zum Vorsprung 10 an der vorderen Schenkelstirnseite 8 angeordnet.

Dadurch greifen die Vorsprünge 10 und die Vertiefungen 11 der einander zugewandten Stirnseitenabschnitte 8, 9 der Schenkel 3, 4 zweier entlang der Laufrichtung F aneinander geschobenen, baugleichen Laufwagen ineinander.

Die geometrischen Drehachsen D der Tragrollen 6a, 7a und der Führungsrollen 6b, 7b, 56b, 57b führen jeweils durch genannte Vorsprünge 10.

Die Tragrollen 6a, 7a von in Laufrichtung F aneinander geschobenen, baugleichen Laufwagen 1, 51 überlappen dabei jeweils mit dem benachbarten Schenkel 3, 4 des unmittelbar vorlaufenden oder nachlaufenden Laufwagens 1, 51 innenseitig.

Die Laufschiene 20 gemäss den beiden Ausführungsformen nach Figur 1 bis 6 weist ein Querschnittsprofil wenigstens drei miteinander verbundene Profilabschnitte 24, 25, 26 auf. Die Profilabschnitte 24, 25, 26 umfassen einen ersten seitlich nach aussen offenen Profilabschnitt 24 mit einer ersten Lauffläche 22a zur Aufnahme der Tragrolle 6a des ersten Schenkels 3 des Laufwagens 1, 51, ferner einen zweiten seitlich nach aussen offenen Profilabschnitt 25 mit einer zweiten Lauffläche 22b zur Aufnahme der Tragrolle 7a des zweiten Schenkels 4 des Laufwagens 1, 51, sowie einen dritten in vertikaler Richtung offenen Profilabschnitt 26 mit zwei Führungsleisten 21a, 21b zur Aufnahme jeweils einer Führungsrolle 6b, 7b; 56b, 57b am ersten und zweiten Schenkel 3, 4 des Laufwagens 1, 51.

Die beiden ersten und zweiten Profilabschnitte 24, 25 sind spiegelsymmetrisch zu einer vertikalen Mittelängsebene 23 der Laufschiene 20 angeordnet. Entsprechend sind die ersten und zweiten Profilabschnitte 24, 25 in einander entgegen gesetzten Richtungen offen.

Der dritte Profilabschnitt 26 ist ebenfalls spiegelsymmetrisch zur vertikalen Mittelängsebene 23 der Laufschiene 20 angeordnet.

Die drei Profilabschnitte 24, 25, 26 sind jeweils im Querschnittsprofil U-förmig ausgebildet. Die U-Form umfasst jeweils einen Profilverbindungsabschnitt 27a-27c und beidseitig daran anschliessende Profilschenkel 28a-28c; 29a-29c.

Die Profilverbindungsabschnitte 27a, 27b des ersten und zweiten Profilabschnitts 24, 25 der Laufschiene 20 stehen senkrecht auf dem Profilverbindungsabschnitt 27c des dritten Profilabschnitts 26 und stossen an diesen an.

Die ersten und zweiten Profilabschnitte 24, 25 sind ferner voneinander beabstandet angeordnet und bilden einen sich in Längsrichtung der Laufschiene 20 erstreckenden geschlossenen Zwischenraum 30 aus.

Der untere Profilschenkel 29a, 29b des ersten und zweiten Profilabschnittes 24, 25 bildet jeweils die Lauffläche 22a, 22b für die Tragrollen 6a, 7a aus. Die Profilverbindungsabschnitte 27a, 27b des ersten und zweiten Profilabschnitts verlaufen parallel zueinander.

Die Profilschenkel 28c, 29c des dritten Profilabschnittes 26 bilden jeweils die Führungsleisten 21a, 21b für die Führungsrollen 6b, 7b; 56b, 57b aus.

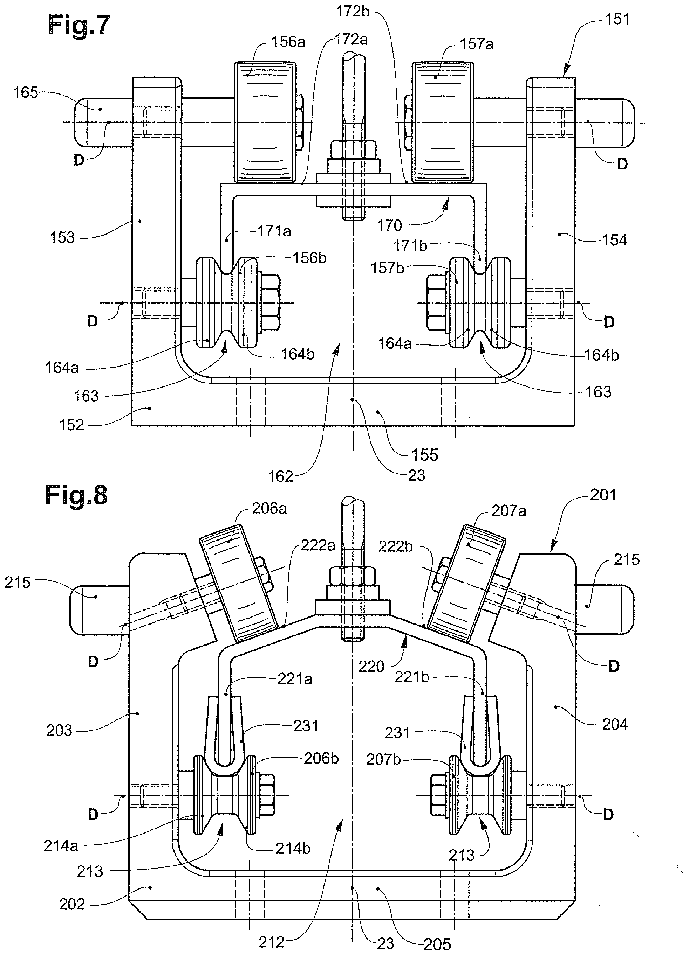

Die Laufschiene 170 gemäss der Ausführungsform nach Figur 7 ist als ein nach unten offenes U-Profil ausgebildet. Das U-Profil weist zwei nach unten gerichtete Profilschenkel auf, welche die Führungsleisten 171a, 171b zur führenden Aufnahme jeweils einer Führungsrolle 156b, 157b ausbilden.

Gemäss den Ausführungsformen nach Figur 8 bis 10 sind die Drehachsen D der Paarungen von Laufrolle und Tragrolle 106a, 106b; 107a, 107b; 206a, 206b; 207a, 207b; 256a, 256b; 257a, 257b an einem der Schenkel 103, 104; 203, 204; 253, 254 in einem spitzen Winkel zueinander angeordnet. Die Drehachsen D gehen in Richtung Schienenaufnahmeraum 112, 212, 262 auseinander.

In der Ausführungsform nach Figur 8 sind die Führungsrollen 206b, 207b stehend angeordnet. Das heisst, die Drehachsen D der Führungsrollen 206b, 207b sind senkrecht zur Mittelängsebene 23 angeordnet. Die Drehachsen der Tragrollen 206a, 207a und mit ihnen die Laufflächen 222a, 222b der Laufschiene 220 sind dahingegen gegenüber der Mittelängsebene 23 geneigt angeordnet.

Die Laufschiene 220 ist hier ebenfalls als ein nach unten offenes U-Profil ausgeführt. Das U-Profil weist ebenfalls zwei nach unten gerichtete Profilschenkel auf, welche die Führungsleisten 221a, 221b zur führenden Aufnahme jeweils einer Führungsrolle 206b, 207b ausbilden.

Die Laufschiene 20, 220 des Laufwagens 51, 201 gemäss den Ausführungsformen nach Figur 4 bis 6 und 8 weist ein jeweils auf die Führungsleiste 21a, 21b; 221a, 221b aufgesetztes U-förmiges Kunststoffprofil 31, 231 auf. Das Kunststoffprofil 31, 231 wird klemmend an der Führungsleiste 21a, 21b; 221a, 221b gehalten. Da durch das Kunststoffprofil auch die Gesamtbreite der Führungsleiste 21a, 21b; 221a, 221 b mit Kunststoffprofil 31, 231 zunimmt, weist die Führungsvertiefung 63, 213 der Führungsrollen 56b, 57b; 206b, 207b des Laufwagens 51, 201 gemäss diesen beiden Ausführungsformen im Vergleich zu den Führungsrollen 6b, 7b; 156b, 157b des Laufwagens 1, 151 gemäss den Ausführungsformen nach Figur 1 bis 3 und 7 eine grössere Breite auf.

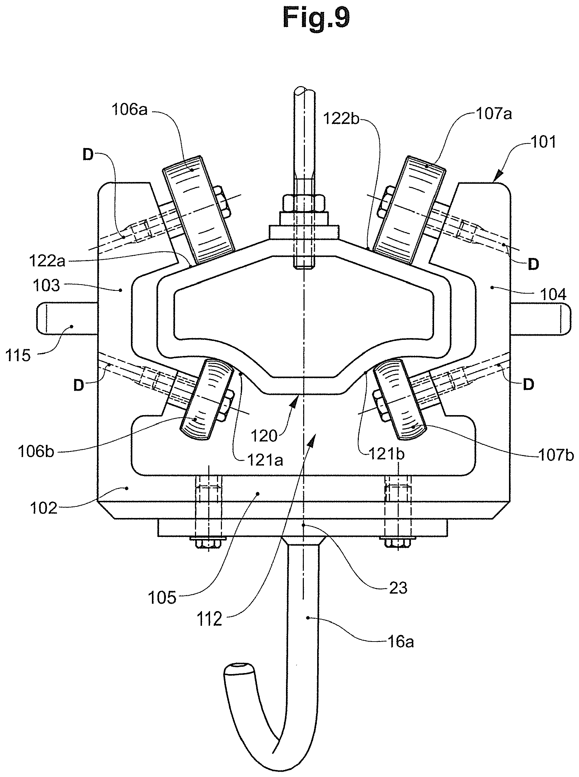

In der Ausführungsform nach Figur 9 sind im Gegensatz zur Ausführungsform nach Figur 8 sowohl die Drehachsen D der Tragrollen 106a, 107a als auch der Führungsrollen 106b, 107b gegenüber der Mittelängsebene 23 geneigt angeordnet. Die Laufflächen 122a, 122b für die Tragrollen 106ba, 107a sind entsprechend ebenfalls geneigt angeordnet.

Ferner ist im Ausführungsbeispiel nach Figur 9 ein aussenseitig, d.h. ausserhalb des Schienenaufnahmeraums 112, am Verbindungsabschnitt 105 angebrachter HalteHaken 16a vorgesehen. Ein Haltehaken 16a ist ansatzweise auch in Figur 3 dargestellt.

Die Laufschiene 120 ist hier als einfaches Hohlprofil ausgeführt. Im Gegensatz zu den Ausführungsformen nach Figur 1 bis 8 bildet die Laufschiene 120 für die Führungsrollen 106b, 107b keine Führungsleisten sondern vielmehr Abrollflächen 121a, 121b aus, welche in einer konkaven Profilvertiefung angeordnet sind. Die Abrollflächen 121a, 121b werden entsprechend von seitlichen, erhöhten Führungsflanken begrenzt.

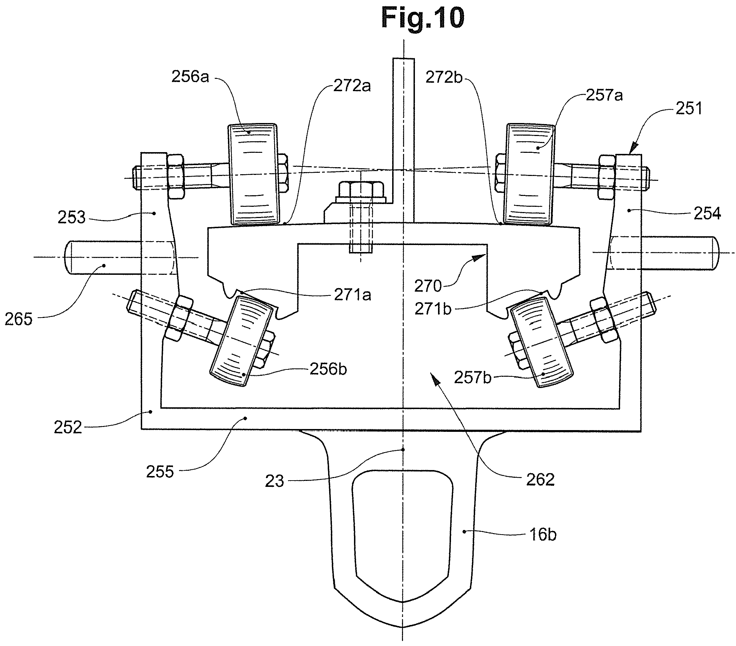

In der Ausführungsform nach Figur 10 sind analog zur Ausführungsform nach Figur 9 sowohl die Drehachsen D der Tragrollen 256a, 257a als auch der Führungsrollen 256b, 257b gegenüber der Mittelängsebene 23 geneigt angeordnet. Die Laufflächen 272a, 272b für die Tragrollen 256a, 257a sind entsprechend ebenfalls geneigt angeordnet. Allerdings ist die Neigung der Drehachsen D der Tragrollen 256a, 257a und somit auch der Laufflächen 272a, 272b vergleichsweise gering.

Die Laufschiene 270 bildet für die Führungsrollen 256b, 257b ebenfalls keine Führungsleisten sondern vielmehr Abrollflächen 271a, 271b aus, welche in einer Profilvertiefung angeordnet sind. Die Abrollflächen 271a, 271b werden hierzu auch hier von seitlichen, erhöhten Führungsflanken begrenzt.

Ferner ist im Ausführungsbeispiel nach Figur 10 eine aussenseitig, d.h. ausserhalb des Schienenaufnahmeraums 262, am Verbindungsabschnitt 255 angebrachte Halte-Öse 16b vorgesehen. Die Öse 16b ist quer zur Laufrichtung F ausgerichtet

Die Laufwagen 1, 51, 101, 151, 201, 251 gemäss den vorliegenden Ausführungsformen nach Figur 1 bis 10 rollen nun über ihre Tragrollen 6a, 7a; 106a, 107a; 156a, 157a; 206a, 207a; 256a, 257a auf den Laufflächen 22a, 22b; 122a, 122b; 172a, 172; 222a, 222b; 272a, 272b entlang der Laufschiene 20, 120, 170, 220, 270 ab.

Die Laufwagen 1, 51, 101, 151, 201, 251 liegen dabei ausschliesslich über ihre Tragrollen 6a, 7a; 106a, 107a; 156a, 157a; 206a, 207a; 256a, 257a den Laufflächen 22a, 22b; 122a, 122b; 172a, 172; 222a, 222b; 272a, 272b und somit der Laufschiene 20, 120, 170, 220, 270 auf.

Dabei wird die Last der Laufwagen 1, 51, 101, 151, 201, 251 ausschliesslich über die Tragrollen 6a, 7a, 106a, 107a; 156a, 157a; 206a, 207a; 256a, 257a auf die Laufflächen 22a, 22b; 122a, 122b; 172a, 172b; 222a, 222b; 272a, 272b und somit auf die Laufschiene 20, 120, 170, 220, 270 übertragen.

Die Führungsrollen 6b, 7b; 56b, 57b; 106b, 107b; 156b, 157b; 206b, 207b; 256b, 257b sind dahingegen unterhalb der jeweiligen Führungsleisten 21a, 21b; 171a, 171b; 221a, 221 b bzw. Abrollflächen 121a, 121b; 271a, 271 b angeordnet und können entsprechend keine Last auf die Laufschiene 20, 120, 170, 220, 270 übertragen. Gemäss den Ausführungsformen nach Figur 1 bis 8 greifen die Führungsleisten 21a, 21b; 171a, 171b, 221a, 221b jeweils von oben in die Führungsvertiefung 13, 163, 213 der ihnen zugeordneten Führungsrolle 6b, 7b; 56b, 57b; 156b, 157b; 206b, 207b ein und gewährleisten so eine seitliche Führung des Laufwagens 1, 51, 151, 251. Diese seitliche Führung verhindert z. B. ein seitliches Kippen des Laufwagens 1, 51, 151,251.

Gemäss den Ausführungsformen nach Figur 9 und 10 sind die Führungsrollen 106b, 107b; 256b, 257b unterhalb der Laufschiene 120, 270 über Abrollflächen 121a, 121b; 271a, 271b, welche in Profilvertiefungen angeordnet sind, entlang der Laufschiene 120, 270 geführt. Die Abrollflächen 121a, 121b; 271a, 271b sind entsprechend von seitlichen, erhöhten Führungsflanken flankiert. Dadurch wird eine seitliche Führung des Laufwagens 101, 251 gewährleistet, welche z. B. ein seitliches Kippen des Laufwagens 101, 251 verhindert.

Gemäss sämtlichen Ausführungsformen nach Figur 1 bis 10 werden durch die kreuzweise gegengleich versetzte Anordnung der Laufrollenpaare 6a, 6b, 7a, 7b; 6a, 56b, 7a, 57b; 106a, 106b, 107a, 107b; 156a, 156b, 157a, 157b; 206a, 206b, 207a, 207b; 256a, 256b, 257a, 257b in bzw. entgegen der Laufrichtung F wirkende Kippmomente aufgenommen.

## Patentansprüche

1. Laufwagen (1, 51) für ein schienengeführtes Fördersystem, insbesondere für ein Hängefördersystem, enthaltend einen zum Umgreifen einer Laufschiene (20) ausgebildeten Laufwagenkörper (2), welcher einen ersten und zweiten Schenkel (3, 4) umfasst, wobei die Schenkel (3, 4) durch einen sich quer erstreckenden Verbindungabschnitt (5) miteinander verbunden sind,
und der erste Schenkel (3) ein auf seiner Innenseite angebrachtes erstes Laufrollenpaar (6a, 6b) aufweist,
und der zweite Schenkel (4) ein auf seiner Innenseite angebrachtes zweites Laufrollenpaar (7a, 7b) aufweist,
wobei das erste und zweite Laufrollenpaar (6a, 6b; 7a, 7b bzw. 6a, 56b; 7a, 57b) der beiden Schenkel (3, 4) kreuzweise gegengleich versetzt zueinander angeordnet sind,
**dadurch gekennzeichnet, dass**
jeweils eine erste Laufrolle (6a, 7a) des ersten und zweiten Laufrollenpaares als Tragrolle ausgebildet ist, über welche die Last des Laufwagens (1, 51) auf die Laufschiene (20) übertragbar ist,
und jeweils eine zweite Laufrolle (6b, 7b) des ersten und zweiten Laufrollenpaares als Führungsrolle zur Führung des Laufwagens entlang der Laufschiene (20) ausgebildet ist.

2. Laufwagen nach Anspruch 1, **dadurch gekennzeichnet, dass** die jeweilige Führungsrolle (6b, 7b) eine Begrenzung gegen eine Verschiebung des Laufwagens (1, 51) in zwei einander entgegengesetzten Richtungen parallel zur Drehachse (D) der Führungsrolle (6b, 7b) ausbildet.

3. Laufwagen nach einem der Ansprüche 1 bis 2, **dadurch gekennzeichnet, dass** die Tragrollen (6a, 7a) und die Führungsrollen (6b, 7b; 56b, 57b) stehend angeordnet sind.

4. Laufwagen nach einem der Ansprüche 1 bis 3, **dadurch gekennzeichnet, dass** die Führungsrollen (6b, 7b; 56b, 57b) jeweils eine in Drehrichtung geschlossen umlaufende, beidseitig von einer Führungsflanke (14a, 14b) eingefasste Führungsvertiefung (13, 63) aufweisen.

5. Laufwagen nach Anspruch 4, **dadurch gekennzeichnet, dass** die beidseitig von einer Führungsflanke (14a, 14b; 64a, 64b) eingefassten Führungsvertiefung (13, 63) eine Führungsrille ist.

6. Laufwagen nach einem der Ansprüche 4 bis 5, **dadurch gekennzeichnet, dass** die Führungsflanke (14a, 14b; 64a, 64b) ein Spurkranz ist.

7. Laufwagen nach einem der Ansprüche 1 bis 6, **dadurch gekennzeichnet, dass** die Drehachsen (D) der Führungsrollen (6b, 7b; 56b, 57b) und der Tragrollen (6a, 7a) parallel zueinander verlaufen.

8. Laufwagen nach einem der Ansprüche 1 bis 6, **dadurch gekennzeichnet, dass** die Drehachsen (D) der Führungsrolle (106b, 107b; 206b, 207b; 256b, 257b) und der Tragrolle (106a, 107a; 206a, 207a; 256a, 257a) einer Laufrollenpaarung in der Parallelprojektion in Laufrichtung (F) einen spitzen Winkel einschliessen, wobei die Drehachsen (D) jeweils zum gegenüber liegenden Schenkel (103, 104; 203, 204; 253, 254) hin auseinandergehen.

9. Laufwagen nach einem der Ansprüche 1 bis 8, **dadurch gekennzeichnet, dass** die Tragrolle (6a, 7a) jeweils zum freien Ende des Schenkels (3, 4) und die Führungsrolle (6b, 7b; 56b, 57b) jeweils zum Verbindungsabschnitt (5) hin am Schenkel (3, 4) angeordnet ist.

10. Laufwagen nach einem der Ansprüche 1 bis 9, **dadurch gekennzeichnet, dass** die Führungsrollen (6b, 7b) mit seitlichem und/oder radialem Spiel am Laufwagenkörper (1, 51) befestigt sind.

11. Laufwagen nach einem der Ansprüche 1 bis 10, **dadurch gekennzeichnet, dass** die Schenkel (3, 4) jeweils eine in Laufrichtung (F) weisende vordere Schenkelstirnseite (8) und eine entgegen die Laufrichtung (F) weisende rückwärtige Schenkelstirnseite (9) aufweisen, und die beiden Schenkelstirnseiten (8, 9) eines Schenkels (3, 4) mindestens eine Paarung aus einem vorstehenden und einem zurückversetzten Stirnseitenabschnitt (10, 11) ausbilden, welche an den Schenkelstirnseiten gegengleich zueinander ausgebildet und angeordnet sind (8, 9), derart dass die vorstehenden und zurückversetzten Stirnseitenabschnitte (10, 11) der Schenkel (8, 9) zweier entlang der Laufrichtung (F) aneinander geschobenen, baugleichen Laufwagen (1, 51) ineinandergreifen.

12. Laufwagen nach einem der Ansprüche 1 bis 11, **dadurch gekennzeichnet, dass** die Schenkel (3, 4) jeweils eine in Laufrichtung (F) weisende vordere Schenkelstirnseite (8) und eine entgegen die Laufrichtung (F) weisende rückwärtige Schenkelstirnseite (9) aufweisen und die Konturen der Schenkelstirnseiten (8, 9) eines Schenkels (3, 4) jeweils zueinander gegengleich ausgebildet sind, derart, dass die Kontur der vorderen Schenkelstirnseite (8) eines nachlaufenden Laufwagens (1, 51) formschlüssig in die Kontur der rückseitigen Schenkelstirnseite (9) eines unmittelbar vorlaufenden, baugleichen Laufwagens (1, 51) eingreifen kann.

13. Laufwagen nach einem der Ansprüche 1 bis 12, **dadurch gekennzeichnet, dass** die Schenkel (3, 4) des Laufwagens (1, 51) derart ausgebildet und die Laufrollen (6a, 7a) derart an den Schenkeln (3, 4) angeordnet sind, dass Laufrollen (6a, 7a) von in Laufrichtung (F) aneinander geschobenen, baugleichen Laufwagen (1, 51) jeweils mit dem benachbarten Schenkel (3, 4) des unmittelbar vorlaufenden oder nachlaufenden Laufwagens (1, 51) innenseitig überlappen.

14. Laufwagen nach einem der Ansprüche 1 bis 13, **dadurch gekennzeichnet, dass** der Laufwagen (1, 51) ein am Laufwagenkörper (2), insbesondere am Verbindungsabschnitt (5), angeordnetes Halteorgan (16a, 16b) zum Halten eines Fördergutes enthält.

15. Fördersystem, insbesondere ein Hängefördersystem, mit einer Laufschiene (20) und mindestens einem Laufwagen (1, 51), insbesondere mit einem Laufwagen (1, 51) nach einem der Ansprüche 1 bis 14, wobei der Laufwagen (1, 51) einen zum Umgreifen einer Laufschiene (20) ausgebildeten Laufwagenkörper (2) aufweist, welcher einen ersten und zweiten Schenkel (3, 4) umfasst, wobei die Schenkel (3, 4) durch einen sich quer erstreckenden Verbindungabschnitt (5) miteinander verbunden sind,
und der erste Schenkel (3) ein auf seiner Innenseite angebrachtes erstes Laufrollenpaar (6a, 6b) aufweist,
und der zweite Schenkel (4) ein auf seiner Innenseite angebrachtes zweites Laufrollenpaar (7a, 7b) aufweist,
wobei das erste und zweite Laufrollenpaar (6a, 6b; 7a, 7b bzw. 6a, 56b; 7a, 57b) der beiden Schenkel (3, 4) kreuzweise gegengleich versetzt zueinander angeordnet sind,
**dadurch gekennzeichnet, dass**
jeweils eine erste Laufrolle (6a, 7a) des ersten und zweiten Laufrollenpaares als Tragrolle ausgebildet ist, über welche die Last des Laufwagens (1, 51) auf die Laufschiene (20) übertragbar ist,
und jeweils eine zweite Laufrolle (6a, 7a) des ersten und zweiten Laufrollenpaares als Führungsrolle (6b, 7b) zur Führung des Laufwagens entlang der Laufschiene (20) ausgebildet ist.

16. Fördersystem nach Anspruch 15, **dadurch gekennzeichnet, dass** die jeweilige Führungsrolle (6b, 7b) und die Laufschiene (20) derart miteinander kooperierend ausgestaltet sind, dass eine Begrenzung gegen eine Verschiebung des Laufwagens (1, 51) in zwei einander entgegengesetzten Richtungen parallel zur Drehachse der Führungsrolle (6b, 7b) ausgebildet wird.

17. Fördersystem nach einem der Ansprüche 15 bis 16, **dadurch gekennzeichnet, dass** die Laufschiene (20) Laufflächen (22a, 22b) für die Tragrollen (6a, 7a) ausbildet.

18. Fördersystem nach einem der Ansprüche 15 bis 17, **dadurch gekennzeichnet, dass** die Laufschiene (20) Führungsleisten (21a, 21b; 171a, 171b; 221a, 221b) zur Führung des Laufwagens (1, 51) entlang der Führungsleisten (21a, 21b) mittels der Führungsrollen (6b, 7b; 56, 57b) ausbildet.

19. Fördersystem nach einem der Ansprüche 15 bis 17, **dadurch gekennzeichnet, dass** die Laufschiene (120, 270) in Laufrichtung (F) verlaufende, jeweils beidseitig von einer Führungsflanke eingefasste Führungsvertiefungen mit jeweils einer Abrollfläche (121a, 121b; 271a, 271b) zur Führung der Führungsrollen (106b, 107b) in der Führungsvertiefungs ausbildet.

20. Fördersystem nach Anspruch 19, **dadurch gekennzeichnet, dass** die Führungsvertiefung konkav ausgebildet ist.
